# EUROPEAN PATENT SPECIFICATION

(11) **EP 0 412 562 B1**
(45) Date of publication and mention of the grant of the patent: **25.05.1994**
(21) Application number: 90115406.2
(22) Date of filing: 10.08.1990
(51) Int. Cl.: B29C 45/70, B29C 45/67

(54) **Injection moulder**
Spritzgiessmaschine
Machine à mouler par injection

(30) Priority: 11.08.1989 CN 89106465
(43) Date of publication of application: 13.02.1991
(73) Proprietor: THE SHUNDE PLASTICS GENERAL MACHINE ENTERPRISES GROUP COMPANY, Daliang, Shunde, Guang Dong (CN)
(72) Inventor: Buming, Huang, Daliang, Shunde, Guang Dong (CN)
(74) Representative: Lieck, Hans-Peter, Dipl.-Ing.

(56) References cited:
- FR-A- 1 235 565
- FR-A- 1 593 009
- GB-A- 706 854
- US-A- 2 519 255
- PATENT ABSTRACTS OF JAPAN vol. 7, no. 207 (M-242)(1352) September 13, 1983
- & JP-A-58 104 732 (SHOJI MATSUDA )

## Description

### Introduction

The present invention relates a new kind of injection moulder which can be used for injection moulding of plastics, rubber and other plastic materials.

### The background of the invention

A traditional injection moulder is generally composed of a mould-matching device, an injection device, a hydraulic system and an electric control system, wherein, the mould-matching device and the injection device are usually independent from each other and hardly connected with each other, and therefore the injection force is not relative to the mould-matching force, and the reaction of the injection force cannot be used to lock moulds. Recently, a kind of mould-matching device with four oil cylinders is proposed, wherein, four oil cylinders are used to replace one big oil cylinder in traditional injection moulder, so as to make its manufacture easy. Said device only uses two mould plates in which one is fixed, and wherein mould-matching oil cylinder is mounted on one mould plate. Because the oil cylinder is not supported effectively, it is not avoidable to cause the tension rod to bend so as to make said device not to work normally, and because the mould-matching speed is slow, in order to raise the mould-matching speed, a speed-increasing oil cylinder or a supercharging device must be added, and therefore the hydraulic system becomes more complex. US-A-4636167 proposes a new kind of injection moulder, in which the reaction of the injection force is used to lock moulds, so as to increase the moulding-locking force, but the mould-matching is completed by two actions, which result in increasing the mould-matching time, for example, a driving device ( e.g. oil cylinder ) must be used to drive the sluice valve; and because the nozzle cannot be removed from the mould, it is not convenient to assemble and disassemble plunger and clean pouring head, and which cannot meet the requirement of general injection technology; and because it is not equipped with a screw-driving unit, it can be only used in small-size plunger injection moulder, so it is limited in application.

The aim of the present invention is to overcome the disadvantages of above injection moulds, and provide a new kind of high-speed and high-efficiency injection moulder with two movable moulds, in which, only two movable mould plates, by means of one continuous action of oil cylinder, are used to complete mould-matching / mould-separating, integrated movement / integrated recession and injection etc. technological processes, and which is simple in structure, high in precision, convenient in mould-adjusting, small in size, easy in manufacturing and low in cost.

This problem is solved by the injection moulder characterized in claim 1, with preferred embodiments to be taken from the subclaims.

The characteristic of the present invention is that there are only two mould plates in mould-matching device, and said two mould plates are all movable; when the high pressure oil continuously flows into general oil cylinder through its end, the motion of its piston can drive the tension rod to complete mould-matching / mould-separating, integrated movement / integrated recession and injection etc. technological processes without transform of various motions.

### Detailed description of the invention

The injection moulder with two movable moulds proposed by the present invention is composed of a mould-matching device, an injection device, a hydraulic system and an electric control system, wherein, only two movable mould plates are arranged in said mould-matching device, which are first movable mould plate and second movable mould plate, and are slidingly and vertically mounted on the frame guide track, and can move along the guide track reciprocally; a pair of split mould is mounted on facing sides which are corresponding to first movable mould plate and second movable mould plate; several tension rods are parallelly arranged on first movable mould plate and second movable mould plate; the left end of said tension rod is fixed on the first movable mould plate and the right end of said tension rod is concentrically connected with the left end of the piston in each general oil cylinder and mould-locking oil cylinder respectively; said tension rod crosses through second movable mould plate, and second movable mould plate is fitted with the middle part of the tension rod and they can move relatively; a driving stand is vertically fixed on the other end of frame guide track relative to the first movable mould plate; an injection stand is slidingly and vertically mounted on the frame guide track between the driving stand and the second movable mould plate, which can move along the frame guide track; several general oil cylinders are fixed on the left side of the driving stand and between the driving stand and second movable mould plate, and are slidingly inserted in the injection stand which can move relative to the general oil cylinder; said general oil cylinders are arranged axisymmetrically around the center of said movable mould plate; the rear piston rod of the piston in said general oil cylinder passes through the driving stand and can slide on said driving stand; several mould-locking oil cylinders are fixed on the right side of second movable mould plate and between second movable mould plate and injection stand, and said movable locking oil cylinders are also arranged axisymmetrically around the center of said movable mould plate, but they are interlaced with above mentioned general oil cylinders, and the rear piston rod of the piston in said mould-locking oil cylinder passes through the injection stand and can slide in said injection stand; said injection device comprises a nozzle, a charging cylinder, a screw stem, wherein, said charging cylinder is fixed on the injection stand and can move together with said injection stand; said nozzle is fixed on the end of said charging cylinder and toward the pouring head of second movable mould plate; the screw stem of the screw stem driving device fixed on said driving stand is mounted in said charging cylinder and can rotate and slide in said charging cylinder; the maximum stroke of said general oil cylinder is slightly greater than or equal to the sum of the stroke of first movable mould plate, maximum distance between the mould pouring head and the nozzle and the injection stroke of the screw stem; said tension rod can also be front piston rod which is integrated with the piston in the general oil cylinder and mould-locking oil cylinder; it is also practicable that said injection stand is fixed and the driving stand is slidingly and vertically mounted on the guide track; the number of general oil cylinder and said mould-locking oil cylinder can be one, two or more.

### Preferred embodiments

Some preferred embodiments are hereinafter detailed by referring to the drawings.

Fig.1 is a structure schematic view of the present invention when the mould is separated.

Fig.2 is a structure schematic view of the present invention when the mould is matched.

Fig.3 is a schematic view of the present invention when the integrated movement is completed.

Fig.4 is a schematic view of the present invention when the injection is completed (driving stand is fixed).

Fig.5 is a 5-5 sectional schematic view on Fig. 1.

Fig.6 is a schematic view of the present invention when the injection is completed (injection stand is fixed).

Fig.7 is a schematic view of the present invention when the oil cylinders are fixed on the same tension rod.

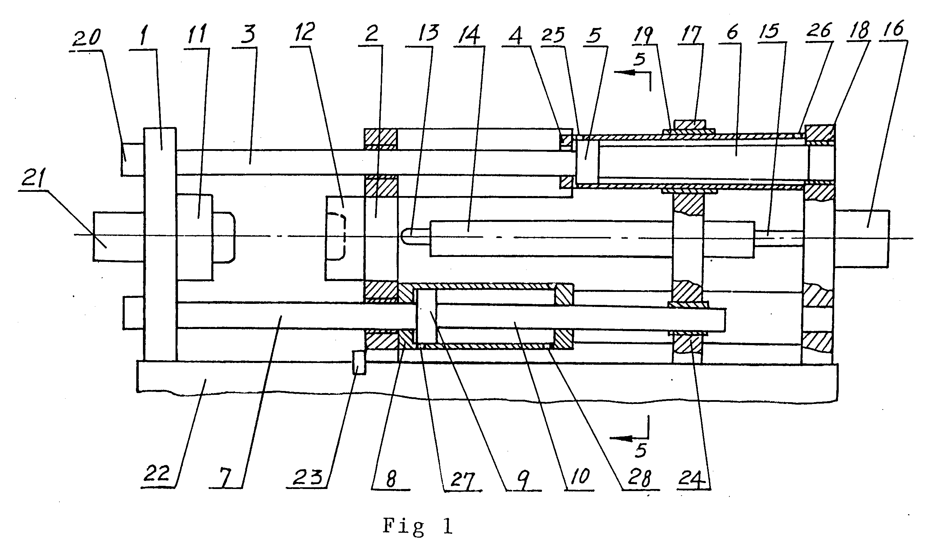

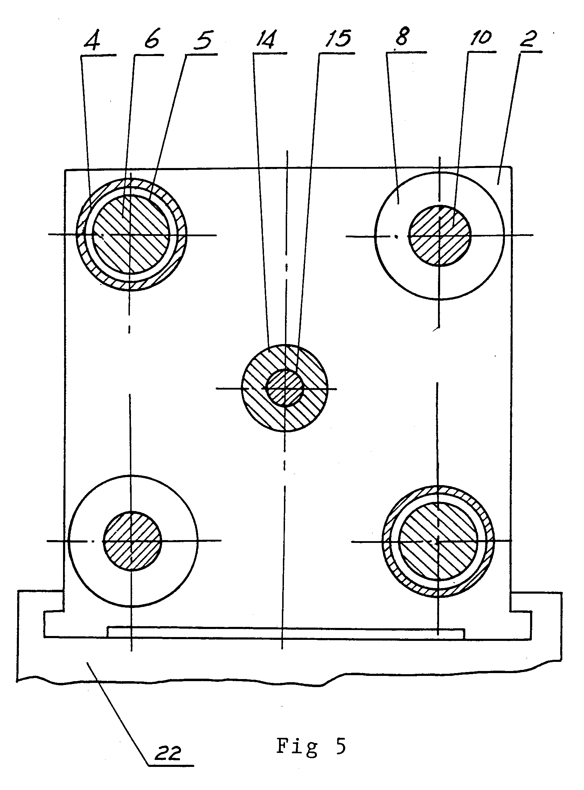

First embodiment is hereinafter detailed by referring to Fig.1 -- Fig.5.

Fig.1 is a structure schematic view of the present invention. Mould-matching device comprises mould plates 1 and 2, tension rods 3 and 7, general oil cylinders 4, mould-locking oil cylinders 8, an injection stand 17 and a driving stand 18 etc.. Injection device comprises a nozzle 13, a charging cylinder 14 and a screw stem 15 etc.. There are only two mould plates 1 and 2 in the mould-matching device: first movable mould plate 1 and second movable mould plate 2, which can move on the frame guide track 22; two axisymmetrically arranged tension rods 3 and two axisymmetrically arranged tension rods 7 are parallel to each other and are interlaced with each other; the first mould plate 1 is fixed with the left end of tension rod 3 and the left end of tension rod 7 by means of nut 20, and, together with the tension rods 3 and 7, can move reciprocally along the frame guide track 22 and toward the second movable mould plate 2; said tension rod 3 crosses through the second movable mould plate, and the second movable mould plate is fitted with the middle part of the tension rod 3 and the right end of the tension rod 7, and can move relative to the tension rod 3 and 7, and can also move reciprocally along the frame guide track 22 and toward the nozzle 13; a positioning key 23 is mounted on the frame guide track 22 and on left side of second mould plate 2 so as to position second mould plate 2 when it moves leftward. Two axisymmetrically arranged general oil cylinder 4 are fixed on the driving stand 18 and can slide in the guide sleeve 19 on the injection stand 17, one end of piston 5 in which is concentrically connected with the right end of the tension rod 3, and other end of piston 5 in which is connected with the rear piston rod 6; the total length of the general oil cylinder can be slightly greater than or equal to the sum of the stroke of the mould plate, the maximum distance of the pouring head of the mould and the nozzle, and the injection stroke. Two axisymmetrically arranged mould-locking oil cylinders 8 are mounted on the right side of second mould plate 2, the left end of piston 9 in which is concentrically connected with the right end of the tension rod 7, and the rear piston rod 10 on the right end of which can slide in the guide sleeve 24 on the injection stand 17. Said injection stand 17 situates between the mould-locking oil cylinder 8 and the driving stand 18. If the driving stand is fixed on the frame, injection stand 17 can move on the frame guide track 22. A charging cylinder 14 is arranged on the center of the injection device and is fixed on the center of the injection stand 17. A nozzle 13 is mounted on the left end of the charging cylinder 14, and a screw stem 15 is inserted in the charging cylinder 14 and can rotate and slide in the charging cylinder 14 to convey injection material. A screw stem driving device 16 is fixed on the driving stand 18. A convex mould 11 is fixed on the first mould plate 1 and a concave mould 12 is fixed on the second mould plate 2. A liftout oil cylinder 21 is fixed on the first mould plate 1.

The technological processes of the present invention are hereinafter detailed referring to Fig.1 -- Fig.5;

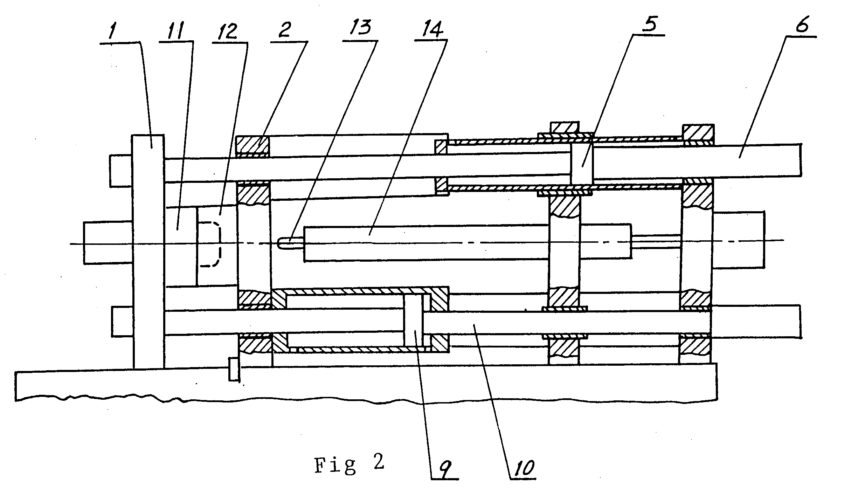

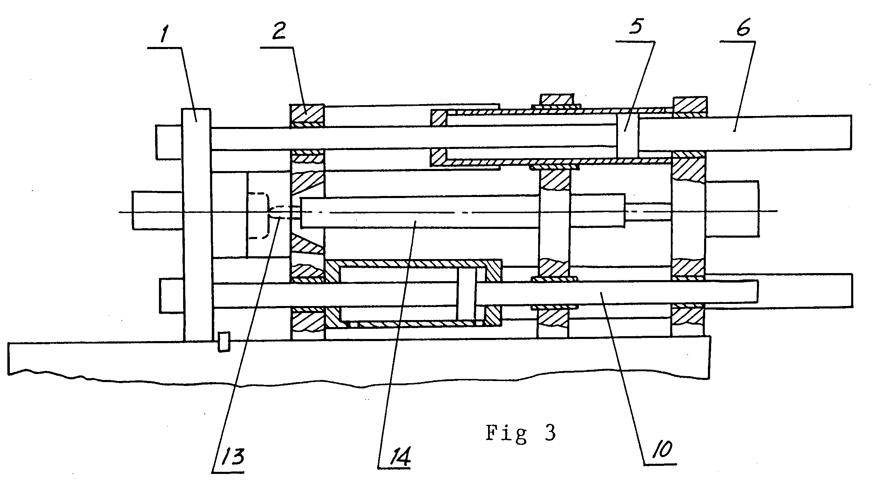

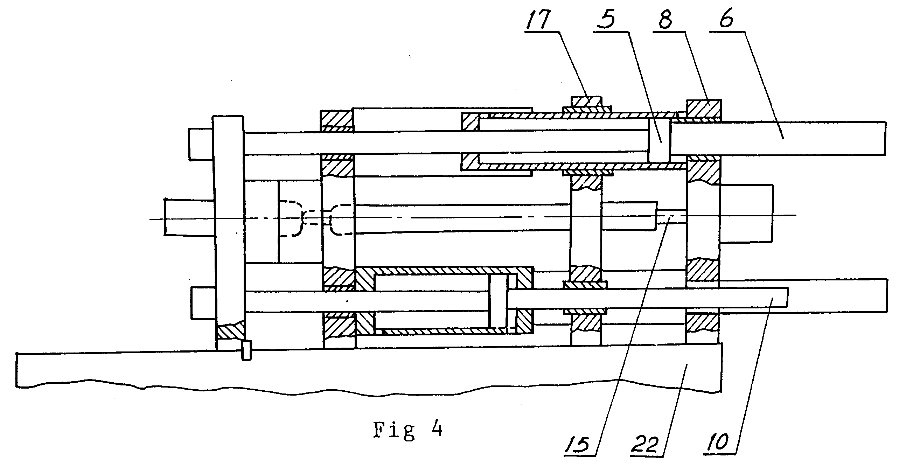

Mould-matching process: High pressure oil flows into the general oil cylinder 4 through the left oil port 25, and the right oil port 26 is communicated with a zero-potential oil tank, and at the same time, the left oil port 27 and the right oil port 28 of the mould-locking oil cylinder 8 are all communicated with the zero-potential oil tank, so high pressure oil pushes the piston 5 in the general oil cylinder 4 to move rightward so as to drive the tension rod 3 and the first mould plate 1 to move toward the second mould plate 2 for mould-matching, and at the same time, the piston 9 in the mould-locking oil cylinder 8 moves rightward. When two moulds touch and close each other, high pressure oil begins to flow into the mould-locking oil cylinder 8 through the left oil port 27 of it. Under the action of the high pressure oil, the piston 9 applies a locking force on two mould plates 1 and 2 by means of tension rod 7, so as to make the moulds 11 and 12 press each other closely. (as shown in Fig.2)
Integrated movement (i.e. the mould plate moves toward the nozzle 13 so as to make the nozzle 13 and the pouring head of the mould press each other ): following above process, high pressure oil keeps on flowing into the general oil cylinder 4 through left oil port 25 and the piston 5 also keeps on moving rightward, and the tension rod 3 drives two locked mould plates 1 and 2 to continue moving toward the nozzle 13, and make the nozzle 13 press the pouring head of the mould 12 and then the nozzle opens. ( as shown in Fig. 3)
Injection process : following above process, high pressure oil keeps on flowing into the general oil cylinder 4 through its left oil port 25, and the piston 5 keeps on moving rightward, and the tension rod 3 drives the mould plates 1 and 2 to move rightward so as to push the charging cylinder 14 and the injection stand 17 to move rightward. Because the screw stem driving device 16 connected with the screw stem 15 is fixed on the driving stand 18 and cannot move rightward, the screw stem 15 moves leftward relative to the charging cylinder 14, and the melted materials are compressed and inject into the moulding chamber with high speed and high pressure, (as shown in Fig.4), and the reaction of the injection force can be used to lock moulds.

After pressure maintaining and cooling, the left oil port 25 of the general oil cylinder 4 is communicated with the zero-potential oil tank, and the high pressure oil is then guided to flow into the general oil cylinder through its right oil port 26, and the left oil port 27 and the right oil port 28 of the mould-locking oil cylinder 8 are communicated with the zero-potential oil tank, so the integrated recession and mould-separating etc. technological processes can be completed. When the high pressure oil keeps on flowing into the general oil cylinder 4, the continuous motion of the piston 5 in the general oil cylinder 4 can drive the tension rod 3 to complete mould-matching / mould separating, integrated movement / integrated recession and injection etc. technological processes continuously without transform of various motions.

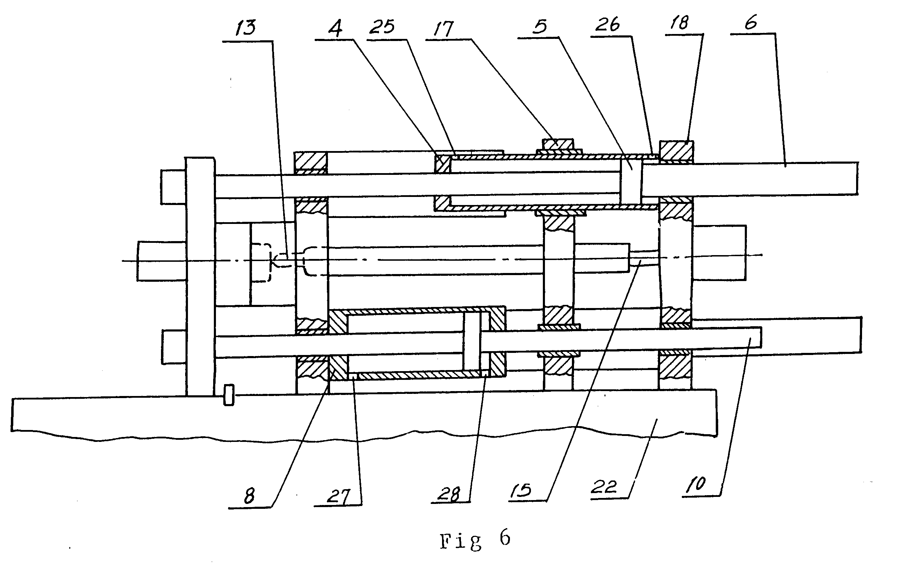

Another embodiment of the present invention is similar to above first embodiment ( as shown in Fig.6 ). The difference is that the injection stand 17 is fixed on the frame guide track 22. When high pressure oil flows into the general oil cylinder 4 through left oil port 25, the piston 5 in the general oil cylinder moves rightward, and first mould plate 1 moves rightward to match moulds, and at the same time, the high pressure oil flows into the mould-locking oil cylinder 8 through left oil port 27 to lock moulds. Because the high pressure oil keeps on flowing into the general oil cylinder through left oil port 25; and the piston 5 keeps on moving rightward, the integrated rightward movement of the mould plates can be completed. When the nozzle 13 touches the pouring head, the charging cylinder 14 is pressed, and because the charging cylinder 14 is fixed on the injection stand, and the injection stand is fixed on the frame, the piston cannot move rightward, and the reaction force of the high pressure oil drives the cylinder together with the driving stand 18 to move leftward, and the screw stem 15 also moves leftward to press the melted materials to inject from the nozzle 13 into the moulding chamber with high pressure and high speed.

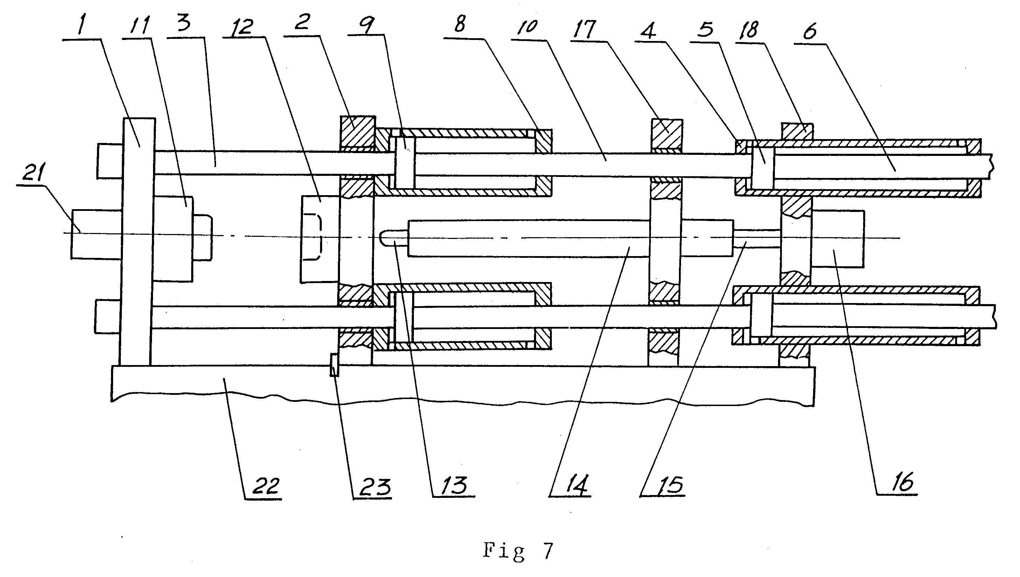

Third embodiment of the present invention ( as shown in Fig.7 ) is similar to first embodiment. The difference is that the pistons 9 in two or four mould-locking oil cylinders 8 are concentrically connected with the pistons 5 in two or four general oil cylinders 4, i.e., the front piston rod of the mould-locking oil cylinder 8 is the tension rod 3, and its rear piston piston rod is the front piston rod of the piston 5 in the general oil cylinder 4; i.e., there are two movable mould plates: first movable mould plate 1 and second movable mould plate 2 in said mould-matching device, which are slidingly and vertically mounted on the frame guide track, and can move reciprocally along the guide track; a pair of split mould is fixed on the facing sides of first movable mould plate 1 and second movable mould plate 2 respectively; several tension rods 3 are parallelly arranged on first movable mould plate 1 and second movable mould plate 2; the left end of said tension rod 3 is fixed on the first movable mould plate 1 and the right end of said tension rod 3 is concentrically connected with the left end of the piston in each mould-locking oil cylinder 8 respectively, and at the same time, the piston in the mould-locking oil cylinder 8 is concentrically connected with the piston in the general oil cylinder 4, and therefore, the rear piston rod 10 of the piston in the mould-locking oil cylinder is the front piston rod 10 of the piston in the general oil cylinder; said tension rod 3 crosses through second movable mould plate 2, and the second movable mould plate is fitted with the right part of the tension rod 3, and they can move relatively; a driving stand 18 is fixed on the other end of the guide track 22 relative to first movable mould plate 1, and an injection stand 17 is slidingly and vertically mounted on the guide track between second movable mould plate 2 and the driving stand 18, which can move along the guide track; several general oil cylinders 4 are fixed on said driving stand 18, which are arranged axisymmetrically around the center of said mould plate, and the front piston rod of the piston in the general oil cylinder crosses through the injection stand 17 and can slide in it; several mould-locking oil cylinders 8 are fixed on the right side of second movable mould plate 2 and between the second movable mould plate 2 and the injection stand 17, which are arranged axisymmetrically around the center of said mould plate and are concentrically corresponding to said general oil cylinders, and the rear piston rod of the piston in the mould-locking oil cylinder 8 ( i.e. the front piston rod of the piston in the general oil cylinder ) crosses through the injection stand 17 and can slide in it; said injection device comprises a nozzle 13, a charging cylinder 14, a screw stem 15, which are mounted on the injection stand 17 and can move together with it; a nozzle 13 is fixed on the end of the charging cylinder 14 and toward the pouring head on the second movable mould plate 2, and a screw stem of the screw stem driving device fixed on the driving stand is mounted in said charging cylinder and can rotate and slide in it.

The advantages of the present invention are following:
1. Mould-matching / mould-separating, integrated movement / integrated recession and injection etc. technological processes are completed continuously, so as to avoid transform of various motions and hydraulic impulsive force, so it is easy to realize automation.
2. The reaction of the injection force can be used to lock mould, so the mould-matching force increases.
3. There are only two mould plates in the device so as to decrease the total length of the device and its weight, so it is compact in structure and low in manufacturing cost.
4. Hydraulic circuit is simple, so the number of valves is few and it is easy to maintain.
5. The device can be used not only to piston injection moulder and screw injection moulder, but also to other special injection moulder or precision injection moulder for special uses.

In the embodiments according to fig. 1 and fig. 6 wherein the general oil cylinders and the mould-locking oil cylinders are interlaced with each other, there should be at least one general cylinder and at least one mould-locking cylinder, but preferably there are two general cylinders and two mould-locking cylinders.

In the embodiment according to fig. 7 wherein each tension rod is connected to a mould-locking oil cylinder and to a general oil cylinder, there are at least two general cylinders and two mould-locking cylinders, but preferably there are four general cylinders and four mould-locking cylinders.

## Claims

1. Injection moulder with a pair of split moulds (11, 12) comprising a mould-matching device and an injection device with a charging cylinder (14), said mould-matching device comprising a first mould plate (1) and a second mould plate (2), both vertically mounted on a frame guide track (22) and movable relative to each other in parallel to the guide track (22), the pair of split moulds (11, 12) being mounted on facing sides of the two mould plates (1; 2), the mould-matching device further comprising several tension rods (3; 7) parallelly arranged between the two mould plates (1; 2), with their one end being fixed to the first mould plate (1) and with their other end each being connected to an oil (hydraulic) cylinder (4; 8), respectively,
characterized by the following features:
each of the two mould plates (1; 2) is movable along the frame guide track (22),
the tension rods (3; 7) each extend slidingly through the second mould plate (2),
one or more of the tension rods is/are connected to an oil cylinder which functions as a mould-locking cylinder (8) and acts between its tension rod (7) and the second mould plate (2),
one or more of the tension rods is/are connected to an oil cylinder which functions as general cylinder (4) and acts between its tension rod (3) and a first stand (one of either 18 or 17) vertically fixed on the frame guide track (22),
a second stand (the other of either 17 or 18) is vertically mounted on the frame guide track (22) adjacent to the first stand for sliding movement along the frame guide track (22), the charging cylinder (14) is fixed to the one (17) of the two stands which neighbours the second mould plate (2), the charging cylinder (14) having a nozzle (13) pointing towards the second mould plate (2),
the charging cylinder (14) comprises an injection stem (15) slidingly received within the cylinder (14) for injecting the molten material through the nozzle (13) into the mould (11, 12), the injection stem (15) being connected to the other one (18) of the two stands, and the maximum stroke of each general cylinder (4) is equal to or slightly greater than the sum of the stroke of the first mould plate (1), the maximum distance between the split mould (12) on the second mould plate (2) and the nozzle (13) and of the injection stroke of the injection stem (15).

2. Injection moulder according to claim 1, wherein the second, movable stand (17) is located between the second mould plate (2) and the first, fixed stand (18), and wherein the general cylinders (4) or the tension rods (3) connected thereto slidingly extend through the second stand (17), (Fig. 1; 7).

3. Injection moulder according to claim 1, wherein the first, fixed stand (17) is located between the second mould plate (2) and the second, movable stand ₍18) and wherein the general cylinders (4) or rear piston rods (6) of the general cylinders (4) slidingly extend through the second stand (18), (Fig. 6).

4. Injection moulder according to claim 1, 2 oder 3, wherein the oil cylinders (4; 8) are double acting cylinders.

5. Injection moulder according to anyone of the preceding claims, wherein the tension rods (3; 7) are connected to the pistons (5; 9) of the oil cylinders (4; 8).

6. Injection moulder according to anyone of the preceding claims, wherein the oil cylinders (4; 8) are arranged axissymmetrically around the center of the mould plates (1; 2).

7. Injection moulder according to anyone of the claims 1 to 6, wherein each tension rod (3; 7) is connected to the piston (9) of a mould-locking cylinder (8), respectively, and wherein each mould-locking cylinder has a rear piston rod (10), each connected to a general cylinder (4) (Fig. 7).

8. Injection moulder according to anyone of the claims 1 to 6, wherein the general cylinders (4) and the mould-locking cylinders (8) are interlaced with each other (Fig. 1; 6).

9. Injection moulder according to claim 8, wherein each mould-locking cylinder (8) has a rear piston rod (10) which slidingly extends through the two stands (17; 18).

10. Injection moulder according to anyone of the preceding claims, wherein the injection stem (15) of the charging cylinder is a screw stem, and wherein a driving device (16) for the screw stem is fixed at the one (18) of the two stands to which the injection stem (15) is connected.

## Patentansprüche

1. Spritzgießmaschine mit einem Paar mehrteiliger Werkzeuge (11, 12), die eine Formenanpaßvorrichtung und eine Einspritzvorrichtung mit einem Füllzylinder (14) aufweist, wobei die Formenanpaßvorrichtung eine erste Formplatte (1) und eine zweite Formplatte (2) aufweist, die beide vertikal auf einer Rahmenführungsschiene (22) angebracht und im Verhältnis zueinander parallel zur Führungsschiene (22) bewegbar sind, wobei die beiden mehrteiligen Werkzeuge (11, 12) an einander zugewandten Seiten der beiden Formplatten (1; 2) angebracht sind, die Formenanpaßvorrichtung ferner mehrere Zuganker (3; 7) aufweist, die parallel zwischen den beiden Formplatten (1; 2) angeordnet sind, wobei ihr eines Ende an der ersten Formplatte (1) befestigt ist und ihr anderes Ende jeweils mit einem entsprechenden (hydraulischen) Ölzylinder (4; 8) verbunden ist, gekennzeichnet durch die folgenden Merkmale:
jede der beiden Formplatten (1; 2) ist längs der Rahmenführungsschiene (22) bewegbar,
die Zuganker (3; 7) erstrecken sich jeweils gleitend durch die zweite Formplatte (2),
einer oder mehrere der Zuganker ist/sind mit einem Hydraulikzylinder verbunden, der als Formschließzylinder (8) fungiert und zwischen seinem Zuganker (7) und der zweiten Formplatte (2) wirkt,
einer oder mehrere der Zuganker ist/sind mit einem Hydraulikzylinder verbunden, der als allgemeiner Zylinder (4) fungiert und zwischen seinem Zuganker (3) und einem ersten Gestell (eines von entweder 18 oder 17) wirkt, welches an der Rahmenführungsschiene (22) vertikal befestigt ist, ein zweites Gestell (das andere von entweder 17 oder 18) ist auf der Rahmenführungsschiene (22) dem ersten Gestell benachbart zur Gleitbewegung längs der Rahmenführungsschiene (22) vertikal angebracht,
der Füllzylinder (14) ist an dem einen (17) der beiden Gestelle befestigt, welches der zweiten Formplatte (2) benachbart ist, wobei der Füllzylinder (14) eine Düse (13) hat, die zur zweiten Formplatte (2) zeigt,
der Füllzylinder (14) weist einen Einspritzschaft (15) auf, der innerhalb des Zylinders (14) zum Einspritzen des geschmolzenen Materials durch die Düse (13) in das Werkzeug (11, 12) gleitend aufgenommen ist, wobei der Einspritzschaft (15) mit dem anderen (18) der beiden Gestelle verbunden ist und der maximale Hub jedes allgemeinen Zylinders (4) der Summe des Hubs der ersten Formplatte (1), der maximalen Entfernung zwischen dem mehrteiligen Werkzeug (12) an der zweiten Formplatte (2) und der Düse (13) sowie des Einspritzhubs des Einspritzschafts (15) gleicht oder etwas größer ist als diese.

2. Spritzgießmaschine nach Anspruch 1, bei der das zweite, bewegliche Gestell (17) sich zwischen der zweiten Formplatte (2) und dem ersten, feststehenden Gestell (18) befindet, und bei dem die allgemeinen Zylinder (4) oder die Zuganker (3), die damit verbunden sind, sich gleitend durch das zweite Gestell (17) erstrecken (Fig. 1; 7).

3. Spritzgießmaschine nach Anspruch 1, bei der das erste, feststehende Gestell (17) sich zwischen der zweiten Formplatte (2) und dem zweiten, beweglichen Gestell (18) befindet, und bei dem die allgemeinen Zylinder (4) oder hinteren Kolbenstangen (6) der allgemeinen Zylinder (4) sich gleitend durch das zweite Gestell (18) erstrecken (Fig. 6).

4. Spritzgießmaschine nach Anspruch 1, 2 oder 3, bei der die Ölzylinder (4; 8) zweiseitig wirksame Zylinder sind.

5. Spritzgießmaschine nach einem der vorhergehenden Ansprüche, bei der die Zuganker (3; 7) mit den Kolben (5; 9) der Ölzylinder (4; 8) verbunden sind.

6. Spritzgießmaschine nach einem der vorhergehenden Ansprüche, bei der die Ölzylinder (4; 8) achsensymmetrisch um die Mitte der Formplatten (1; 2) angeordnet sind.

7. Spritzgießmaschine nach einem der Ansprüche 1 bis 6, bei der jeder Zuganker (3; 7) jeweils mit dem Kolben (9) eines Formschließzylinders (8) verbunden ist, und bei dem jeder Formschließzylinder eine hintere Kolbenstange (10) hat, die jeweils mit einem allgemeinen Zylinder (4) verbunden ist (Fig. 7).

8. Spritzgießmaschine nach einem der Ansprüche 1 bis 6, bei der die allgemeinen Zylinder (4) und die Formschließzylinder (8) miteinander verflochten sind (Fig. 1; 6).

9. Spritzgießmaschine nach Anspruch 8, bei der jeder Formschließzylinder (8) eine hintere Kolbenstange (10) hat, die sich gleitend durch die beiden Gestelle (17; 18) erstreckt.

10. Spritzgießmaschine nach einem der vorhergehenden Ansprüche, bei der der Einspritzschaft (15) des Füllzylinders ein Schraubschaft ist, und bei der eine Antriebsvorrichtung (16) für den Schraubschaft an einem (18) der beiden Gestelle befestigt ist, mit dem der Einspritzschaft (15) verbunden ist.

## Revendications

1. Machine de moulage par injection présentant une paire de moules à coins (11, 12) comprenant un dispositif d'adaptation de moule et un dispositif d'infection présentant un vérin de chargement (14), ledit dispositif d'adaptation de moule comprenant un premier plateau de moulage (1) et un second plateau de moulage (2), tous deux montés verticalement sur un rail de guidage de bâti (22) et mobiles l'un par rapport à l'autre parallèlement au rail de guidage (22), la paire de moules à coins (11, 12) étant montée sur des faces en regard des deux plateaux de moulage (1 ; 2), le dispositif d'adaptation de moule comprenant en outre plusieurs tirants montés parallèlement entre les deux plateaux de moulage (1 ; 2), leurs premières extrémités étant fixées au premier plateau de moulage (1) et leurs autres extrémités étant chacune reliées à un vérin (4 ; 8) à huile (hydraulique), respectivement,
caractérisée par les points suivants :
chacun des deux plateaux de moulage (1 ; 2) est mobile le long du rail de guidage de bâti (22),
les tirants (3 ; 7) s'étendent chacun en coulissant à travers le second plateau de moulage (2),
l'un ou plusieurs des tirants est/sont relié(s) à un vérin à huile qui fonctionne en tant que vérin de verrouillage de moule (8) et agit entre son tirant (7) et le second plateau de moulage (2),
un ou plusieurs des tirants est/sont relié(s) à un vérin à huile qui fonctionne en tant que vérin général (4) et agit entre son tirant (3) et un premier support (l'un parmi 18 ou 17) fixé verticalement au rail de guidage de bâti (22),
un second support (l'autre parmi 17 ou 18) est monté verticalement sur le rail de guidage de bâti (22) de manière adjacente au premier support en vue d'un mouvement de coulissement le long du rail de guidage de bâti (22), le vérin de chargement (14) est fixé à l'un (17) des deux supports qui est voisin du second plateau de moulage (2), le vérin de chargement (14) présentant une buse (13) dirigée vers le second plateau de moulage (2), le vérin de chargement (14) comprend une tige d'injection (15) reçue à coulissement à l'intérieur du vérin (14) pour injecter la matière moulée à travers la buse (13) dans le moule (11, 12), la tige d'injection (15) étant reliée à l'autre (18) des deux supports, la course maximale de chaque vérin général (4) étant égale ou légèrement supérieure à la somme de la course du premier plateau de moulage (1), distance maximale entre le moule à coins (12) sur la seconde plaque de moulage (2) et la buse (13), et de la course d'injection de la tige d'injection (15).

2. Machine de moulage par injection selon la revendication 1, dans laquelle le second support mobile (17) est placé entre le second plateau de moulage (2) et le premier support fixe (18), et dans laquelle les vérins généraux (4) ou les tirants (3) reliés à ces derniers s'étendent en coulissant à travers le second support (17) (fig. 1 ; 7).

3. Machine de moulage par injection selon la revendication 1, dans laquelle le premier support fixe (17) est placé entre le second plateau de moulage (2) et le second support mobile (18) et dans laquelle les vérins généraux (4) ou les tiges de pistons arrière (6) des vérins généraux (4) s'étendent en coulissant à travers le second support (18) (fig. 6).

4. Machine de moulage par injection selon la revendication 1, 2 ou 3, dans laquelle les vérins à huile (4 ; 8) sont des vérins à double effet.

5. Machine de moulage par injection selon une quelconque des revendications précédentes, dans laquelle les tirants (3 ; 7) sont reliés aux pistons (5 ; 9) des vérins à huile (4 ; 8).

6. Machine de moulage par injection selon une quelconque des revendications précédentes, dans laquelle les vérins à huile (4 ; 8) sont montés de manière asymétrique autour du centre des plateaux de moulage (1 ; 2).

7. Machine de moulage par injection selon une quelconque des revendications précédentes, dans laquelle chaque tirant (3 ; 7) est relié au piston (9) d'un vérin de verrouillage de moule (8), respectivement, et dans laquelle chaque vérin de verrouillage de moule présente une tige de piston arrière (10), reliée chacune à un vérin général (4) (fig. 7).

8. Machine de moulage par injection selon une quelconque des revendications 1 à 6, dans laquelle les vérins généraux (4) et les vérins de verrouillage de moule (8) sont entrecroisés l'un avec l'autre (fig. 1 ; 6).

9. Machine de moulage par injection selon la revendication 8, dans laquelle chaque vérin de verrouillage de moule (8) présente une tige de piston arrière (10) qui s'étend en coulissant à travers les deux supports (17 ; 18).

10. Machine de moulage par injection selon une quelconque des revendications précédentes, dans laquelle la tige d'injection (15) du vérin de chargement est une tige à vis, et dans laquelle un dispositif d'entraînement (16) pour la tige à vis est fixé à l'un (18) des deux supports auxquels la tige d'injection (15) est reliée.
